# EUROPEAN PATENT SPECIFICATION

(11) **EP 1 432 608 B1**
(45) Date of publication and mention of the grant of the patent: **31.05.2006**
(21) Application number: 02763418.7
(22) Date of filing: 07.08.2002
(51) Int. Cl.: B62M 7/14, A63B 55/08

(54) **MOTORIZED GOLF CAR WITH DETACHABLE CARRIERS**
MOTORISIERTER GOLFWAGEN MIT LÖSBAREN TRÄGERN
VOITURE DE GOLF MOTORISEE A SUPPORTS DETACHABLES

(30) Priority: 07.08.2001 US 924039; 24.09.2001 US 961882; 15.03.2002 US 364554 P; 31.05.2002 US 159634
(43) Date of publication of application: 30.06.2004
(73) Proprietor: Cassoni, Robert P., Dayton, Ohio 45458 (US)
(72) Inventor: Cassoni, Robert P., Dayton, Ohio 45458 (US)
(74) Representative: Sparing, Rolf Klaus
(86) International application number: PCT/US2002/024930
(87) International publication number: WO 2003/013947

(56) References cited:
- US-A- 2 825 574
- US-A- 3 059 713
- US-A- 3 583 510
- US-A- 3 784 138
- US-A- 4 573 549
- US-A- 6 164 896
- US-A1- 2001 048 011
- US-B1- 6 361 264
- PATENT ABSTRACTS OF JAPAN vol. 1998, no. 11, 30 September 1998 (1998-09-30) & JP 10 155954 A (HOUZUMI GIYAA:KK), 16 June 1998 (1998-06-16)

## Description

### BACKGROUND OF THE INVENTION

The present invention relates generally to the sport of golf, and more particularly to golf cars, also known as golf carts.

On a golf course, golfers often carry their own golf clubs in a golf club bag. The golfers may walk the entire course with the golf club bag held by a strap swung over their shoulder. A typical set of golf clubs may include 12 golf clubs or more. The set of clubs thus is often heavy and cumbersome to carry over an entire course. A caddie may accompany the golfer to aid in carrying the golf clubs.

Wheeled golf club carriers, also known as pull or push carts, have been developed to permit golfers to wheel their clubs over the course, by pulling the carrier by hand. The golf club carriers typically permit a golf bag to be attached by straps, and the golf bag is thus transported over the entire golf course by the golfer pulling or pushing the carrier. Such manual golf club carriers and the associated walking of the entire course however lead to slow golf games, which can be a major problem on popular golf courses. Moreover, some golfers fatigue or are incapable of walking an entire golf course, which can require 4 kilometers of travel or more.

Motorized golf cars, typically having electric or internal-combustion motors, also are known. Some courses even require such carts to speed golf play. These motorized golf cars typically move along specially-designated areas, or cart paths, on the golf course so that golfers can proceed with ease quickly throughout the golf course. Some golf courses permit golf cars to travel not just on the cart paths, but also over the entire course, including fairways. However, this travel can damage the golf course. For example, when a fairway is wet, the golf cars can leave muddy track marks on the fairway or even on the greens. For this reason, many golf courses confine motorized golf cars to the cart paths.

When using a motorized golf car, golfers typically place their golf bags in the golf car and strap them in. They do not remove the bags during play, since the bags with the clubs are heavy and the golf bag must be lifted to be strapped in. Typically, the bottom of the bag sits at least .3 meters from the ground, and the straps are even higher. The lifting of the golf bag in the first place is also burdensome.

On a course where the motorized golf cars are confined to the cart paths, golfers without caddies typically golf as follows: (1) The golfer drives his cart to a tee, decides what club to use and removes that club from the golf bag located in the golf car, and then tees off; and (2) the golfer then drives the cart along the path to a location near the golf ball, guesses which one or two clubs might be proper, removes the clubs from the golf bag situated or attached to the golf car; and then walks to the golf ball with the clubs in hand, and hits the ball. This second step continues until the golfer has placed the ball in the cup.

A problem occurs when a golfer selects the wrong club or clubs from the bag in the motorized cart. Improper selection can occur for example because of the lie or by mistaking the distance of the ball or the wind speed at the location of the ball. The golfer then must walk back to the cart and replace his clubs with a proper club. Since his ball may be a long distance from the golf car, a long delay can result. Moreover, his partner in the motorized golf car, which typically has two seats, could have driven the motorized cart to a new location, leading to even longer delays.

If two players are using a motorized cart on a golf course where motorized carts are permitted on the fairway, a similar problem may occur: the first golfer may choose one or two clubs, and the second golfer will drive the cart to a new position. If the first golfer has chosen the wrong clubs and must return to the golf car at a new location to exchange clubs, the speed of play can be drastically reduced.

U,.S, Patent No. 5,472;084 discloses a piggyback golf bag for use in a riding golf car. An attachment device can connect the golf bag to the golf car. The golf bag when attached to the golf car rides in a compartment and must be lifted onto the golf car.

U.S. Patent No. 6,193,256 and 5,482,304 disclose trailer devices for golf equipment. The golf equipment trailer of the 256 patent does not function as a golf club carrier, which is defined herein as a manually-movable golf club carrier, such as push or pull cart. The pull-type golf car of the 304 patent is attachable solely to a bicycle, and appears not to be intended to be detachable during play hut rather that the bicycle be ridden on the golf course.
JP 10-155954, which constitutes the closest prior art for this application, discloses a motorized golf cart comprising a golf bag carrier. Said golf bag carrier is designed to carry two golf bags thereon and has two or four wheels such that the carrier can be manually-operated independently from the motorized golf cart. The motorized golf cart further comprises a hitching device to which the golf bag carrier can be connected. When the golf bag carrier is connected to the motorized golf cart, two golf bags are carried simultaneously by the motorized golf cart.

### SUMMARY OF THE INVENTION

An object of the present invention is to permit golfers to easily attach a golf club carrier to a motorized golf car. Another alternate or additional object is to permit golfers to take all their clubs with them as they travel about a golf course on a motorized golf car. Yet another alternate or additional object of the invention is to reduce the use of motorized golf cars on fairways and playing surfaces on a golf course. Still a further alternate or additional object of the present invention is to reduce the amount of lifting required by a golfer on a golf course. One other alternate or additional object of the present invention is to speed the play of golf on a golf course.

The present invention provides a golf cart with a detachable golf club carrier comprising a motorized golf cart for movement over a ground surface the golf cart having seating for at least two golfers, the motorized golf cart having a motor and a first hitching device and a second hitching device, a first manually-operable golf club carrier having at least one wheel and a first carrier hitching device removably connected to one of the first hitching device and the second hitching devices, the first carrier hitching device being connectable with the one of the first hitching device and the second hitching devices while the at least one wheel is on the ground surface, and a second manually-operable golf club carrier having at least one wheel and a second carrier hitching device removably connected to the other of the first hitching device and the second hitching device.

The golf club carrier thus can be easily attached and detached to the motorized golf car, without any lifting, as the golf car is driven and then stopped at various points along a cart path or anywhere on the course. The golfer can unhitch the golf club carrier and wheel it, along with all the golfer's golf clubs, to a desired location on the course. Any club can be selected. The first golfer's companion, if any, in the golf car can drive the cart on to the next desired location, without worrying that the first golfer will need to return due to improper club selection. The first golfer can then wheel the golf club carrier to the next ball location or back to the motorized golf car, where it can be easily reattached without lifting.

In a highly preferable embodiment, the wheels of the golf club carrier are retractable from the ground surface when the first carrier hitching device is connected to the first hitching device. The golf clubs and the carrier thus are better protected on the cart, as ground disturbances are not transferred via the wheel of the golf club carrier as the golf car is driven. Moreover, reverse motions of the cart will not cause the golf club carrier to jackknife or be damaged.

However, the wheel of the golf club carrier could remain on the ground in a less preferable embodiment. The golf club carrier then preferably includes at least one shock absorber.

One of the first hitching device and the first carrier hitching device may include a horizontal bar and the other hitching device a latch for latching onto the bar.

Preferably, the golf club carrier hag two wheels and further includes an axle connecting the two wheels. The motorized golf car preferably hag two Beats, and four wheels. The present invention is advantageously used with the two Beats, since this permits a companion to continue to travel as the first golfer is using the detached golf club carrier. The advantages of the present invention for two golfers are numerous, as speed of play even on a course that permits carts on fairways can be increased. Preferably, two golf club carriers are attached to each motorized golf car.

The golf club carrier preferably is a pull cart.

The golf club carrier preferably includes a golf club hag removable from the carrier body, although the bag may be integrated with the golf club carrier.

The first hitching device preferably is located at a rear of the golf car, and may be detachably secured to the golf car. However, it is possible for the first hitching device to be located at the side of the golf car or anywhere else along the perimeter of the golf car.

The golf car may have a third latching device, an4 the preferred second golf club carrier have at least one second wheel and a fourth latching device removably connected to the third latching device, which may be at the side or anywhere on the perimeter of the golf car.

The present invention also provides a golf car comprising a frame, a motor supported in the frame, at least one seal supported in the frame, and a hitching device connected to the frame, the hitching device operative for attaching a detachable wheeled, golf club carrier without lifting of the golf club carrier.

The hitching device preferably is detachable from the golf car, for example through screws, and may be retrofitted to existing golf cars.

The frame hag sides, and the first hitching device is preferably connected to one of the sides. Another hitching device similar to the first hitching device may be connected to the frame, the second hitching device operative for connecting another detachable wheeled golf club carrier.

Most preferably, the hitching device is located less than or equal to 0,25 meters from the ground when the golf car is in operation, so a proper leverage with the golf club carrier can be achieved.

The present invention also provides a golf club carrier comprising a carrier body, a golf bag supported by the body for holding a plurality of golf clubs, and at least one wheel connected to the carrier body. A handle connects to the carrier body for permitting a person to move the carrier using the at least one wheel. A hitching device connects to the carrier body for connecting to another hitching device on a golf car.

The at least one wheel preferably is retractable when the hitching device is connected to the other hitching device.

The golf club carrier may have a support surface, with the golf club carrier capable of standing upright when the support surface and the at least one wheel contact ground.

The present invention also provides a method for connecting a wheeled golf club carrier to a motorized golf car comprising the steps of wheeling the golf club carrier using a handle aside the motorized golf car using at least one wheel of the golf club carrier and connecting the golf club carrier to the motorized golf car while the at least one wheel remains on a ground surface.

The connecting step may further include retracting the at least one wheel from the ground surface.

The golf club carrier may be unhitched from the motorized golf car repeatedly over during a golf game.

The present invention also provides a method for connecting a wheeled golf club carrier to a motorized golf car comprising the steps of moving the golf club carrier aside the motorized golf car using a handle and at least one wheel of the golf club carrier and connecting the golf club carrier to the motorized golf car without lifting the golf club carrier

In addition the present invention also provides in a preferable embodiment a motorized golf car with a detachable golf club carrier comprising a golf car for movement over a ground surface, the golf car having a motor and a first hitching device at an exterior of the golf car, and a golf club carrier having a handle, a carrier body, a golf club hag, at least one wheel and a second bitching device. The golf club hag is selectively attachable to the carrier body, with the second hitching device removably connected to the first hitching device, and with the second bitching device being connected to the carrier body.

With the present device, a novel method for playing golf is possible. The present invention thus also provides a method for playing golf comprising the steps of attaching a first detachable wheeled golf club carrier to a motorized golf car, attaching a second detachable wheeled golf club carrier to the motorized golf car, and repeatedly detaching and attaching the first and second detachable wheeled golf club carriers from the golf car during a game of golf.

Preferably, the detachable wheeled golf club carriers need not be lifted to be attached.

The present invention also provides in a preferable embodiment a motorized golf car with a detachable golf club carrier comprising a golf car for movement over a ground surface, the golf car having a motor and a first hitching device at an exterior of the golf car, the first hitching device having at least one attachment point less than or equal to 0,25 meters from the ground surface, and a golf club carrier having a handle, a carrier body, a golf club hag, at least one wheel and a second bitching device for connecting to the first hitching device.

The low positioning of the hitching device minimises the angle required to tip the hag so as to attach the carrier to the golf car.

The present invention also provides in a preferable embodiment that a motorized golf car with a detachable golf club carrier comprising a golf car for movement over a ground surface, the golf car having a motor and a first bitching device at an exterior of the golf car, and a golf club carrier having a handle, a carrier body, a golf club bag, at least one wheel and a second hitching device for connecting to the first hitching device. The golf club carrier has a weight associated with it, and the first hitching device carries the entire weight of the golf club carrier in a locked position. The hitching device is thus cantilevered with respect to the golf car.

This provides an advantage over existing carts, where a flat surface must be provided to support a bottom of the golf bags. Shorter and more compact golf cars can be designed.

Hitching device as defined herein is any type of connecting device operable to prevent the golf club carrier from detaching from the motorized golf car during normal operation on a golf course, and may include an existing part of conventional golf cars or golf club carriers. It also may include more than one part separated from another, e.g. the interconnection of the first and second hitching devices may occur at more than just a single point.

Advantageously, the hitching device may be retrofitted to an existing cart, the hitching device in this embodiment thus not being a part of an existing cart

The present invention also provides a motorized golf car having a motor for driving the golf car, a motorized actuator and a first hitching device, the actuator connected to the first hitching device for moving the first hitching device between a first position and a second position.

By having a motorized actuator move the hitching device, various detachable devices can be attached to the hitching device and lifted by the actuator, without any manual lifting force being required.

Preferably, the motorized golf car includes a detachable device with at least one wheel, the detachable device being connectable to the first hitching device in the first position, the at least one wheel being retracted in the second position. "Retracted" as defined herein means that the wheels are not in contact with the ground.

Preferably, the detachable device to be lifted by the actuator is a manually-operable golf club carrier. However, advantageously, other detachable devices with at least one wheel may be attached to the first hitching device and lifted using the actuator. Thus, shopping carts, specialized carts for garden tools, wheelchairs, and other devices may be interchanged and carried by the golf car. The actual sizes and limits of the detachable devices is a function of the rating of the actuators and the weight and center of gravity of the detachable devices. The detachable devices may include a further hitching device for connecting to the first hitching device.

Preferably, the golf car includes a second hitching device, and a second actuator for moving the second hitching device between a third position and a fourth position. Thus two detachable devices can be selectively attached to the golf car.

Preferably, the golf car has a rear bag bay, and the first hitching device and first actuator attach to the golf car in the rear bag bay. The second actuator and second hitching device also may fit into the rear bag bay.

The first and second actuators preferably are motorized linear actuators. Preferably, the linear actuators are powered by a rechargeable battery, for example the battery of the motorized golf car or separate batteries provided for the actuators. Most preferably, the actuators are dc motor powered linear ball screw actuators. The present applicant has found that Linak LA-31 electrically-driven fast motor actuators with a 150mm stroke, available commercially from LINAK U.S., Inc., 2200 Stanley Gault, Pkwy, Louisville, KY 40223 are possible actuators for use with the present invention.

Other possible motorized actuators can include: air-cylinder driven actuators receiving compressed air from an on-board compressor or small tank of compressed air charged, for example, daily; an actuator with an hydraulic cylinder with a hydraulic motor or pump, or a retractable cable-based actuator.

The detachable devices preferably include at least a frame section made metal, such as aluminum or steel, to improve stability.

The first hitching device preferably is rotatably connected to the golf car around a first axis, and the first actuator rotates the first hitching device about the first axis. Preferably, the second hitching device also is rotatable about the first axis, through the second actuator.

The first hitching device may extend beyond the rear of the golf car. The first position then preferably is located further away from a center of the golf car than the second position, so that the first hitching device may pulled inwardly by the actuator so as to lift the detachable device.

Preferably, a switch is provided to actuate the actuator to move between the first and second positions. The actuator also can be actuated to move from the first position to the second position by contact of the hitching device with the detachable device.

The present invention also provides a mountable actuating device for motorized vehicles comprising: a frame, a first hitching device and a second hitching device movable with respect to the frame, a first actuator connected to the frame for moving the first hitching device between a first position and a second position, and a second actuator connected to the frame for moving the second hitching device with respect to the frame between a third position and a fourth position.

With the mountable actuating device of the present invention, the device can be easily pre-assembled and placed on a motorized vehicle such as a golf car.

The actuating device preferably includes attachment devices, for example nuts and bolts, so that it may easily be retrofitted to existing golf cars, preferably in the bag bay. Preferably, the attachment devices include two bracket assemblies for connecting to bag holder frames of the golf car.

The present device could be used with other vehicles other than golf cars. The present invention thus also provides a motorized vehicle comprising: a motor, a rechargeable battery, a hitching device and an actuator driven by the battery, the actuator moving the hitching device between a first position and a second position. The rechargeable battery may be an additional battery to the battery of the motorized vehicle, or the same, if the vehicle already includes a rechargeable battery. A second actuator may also be provided.

The present invention also provides a method for connecting a wheeled detachable device to a motorized golf car comprising the steps of wheeling the detachable device aside the motorized golf car, connecting the detachable device to the motorized golf car while the at least one wheel remains on a ground surface, and actuating an actuator to retract the at least one wheel off the ground surface.

In addition to the advantages of the present invention enjoyed by the golfer, the golf course operator employing the present invention can: (1) maintain a well-groomed course by restricting ride carts to the paved paths or only to 90° fairway angles; (2) improve the pace of play (more golfers per day means more money per day) by enabling golfers to have ride cart speed with golf club carrier access; (3) charge an additional fee for the golf club carrier attachment, since the ride carts can be operated with or without the pull cart attachment; and/or (4) attract golfers to the course by offering improved access and convenience over the course.

The present invention also has the added advantage that a foursome golfing with two carts can switch partners easily and repeatedly throughout a golf game. For example, a first golfer and a second golfer have carriers attached to one golf car, and a third and fourth golfer have carriers attached to the second cart. The first golfer and second golfers hit balls near the ball of the third golfer. The fourth golfer's ball is further away. The first golfer and second golfers can drive to near their balls, and release their carriers. The fourth golfer can drop off the third golfer, who detaches that golfers' carrier. The fourth golfer can proceed further. Any of the first, second and third golfers, perhaps the one closest, can then later join up with the fourth golfer and the second golf car and reattach the golf bag carrier. When playing a foursome (or threesome), this arrangement also eliminates worry about the pairing of golfers in the golf cars at the start of the game, since the golfers may switch carts easily. Also speed of two-cart play can be significantly increased, since players can return to the closest cart.

### BRIEF DESCRIPTION OF THE DRAWINGS OF THE PREFERRED EMBODIMENT

The present invention will be shown with reference to a preferred embodiment of the present invention, in which:

Fig. 1 shows a schematic top view of the golf car of the present invention, with a shopping cart as one of the detachable devices and a wheeled golf car carrier as another;

Fig. 2 shows the golf car with two hitching devices and two detachable wheel golf club carriers attached to the hitching devices;

Fig. 3 shows the golf car of Fig. 2 with the wheeled golf club carriers removed;

Fig. 4 shows a view of the actuating device of the present invention;

Fig. 5 shows a view of a conventional rear bag bay of a motorized golf car;

Fig. 6 shows a golf club carrier of the present invention;

Fig. 7 shows the golf club carrier as in Fig. 6 with the golf club carrier attached in the retracted position to the first hitching device, the second hitching device and second actuator of the actuating device not being shown for clarity;

Fig. 8 shows a side view of Fig. 7 with the first hitching device in the second position;

Fig. 9 shows the same view as Fig. 8, with the first hitching device between the second position and the first position;

Fig. 10 shows the same view as Fig. 9, with the first hitching device near the first position, where the wheels of the golf club carrier are attached to ground;

Fig. 11 shows the actuator further extended from the Fig. 10 position, but before its first or fully extended position;

Fig. 12 shows a first release step of the golf club carrier from the first hitching device;

Fig. 13 shows a second release step of the golf club carrier from the first hitching device;

Fig. 14 shows the golf club carrier released from the motorized golf car;

Fig. 15 shows a different perspective view of the Fig. 2 configuration, the golf bags not being shown for clarity;

Fig. 16 shows a top view of the Fig. 2 configuration;

Fig. 17 shows a rear view of the Fig. 2 configuration;

Fig. 18 shows one golf club carrier attached and another being released;

Fig. 19 shows an alternate golf club carrier for use with the actuators of Fig. 4; and

Fig. 20 shows an alternate golf club carrier with use on a stationary hitch attached to the golf car.

### DETAILED DESCRIPTION

The present invention will be described with reference to a preferred embodiment.

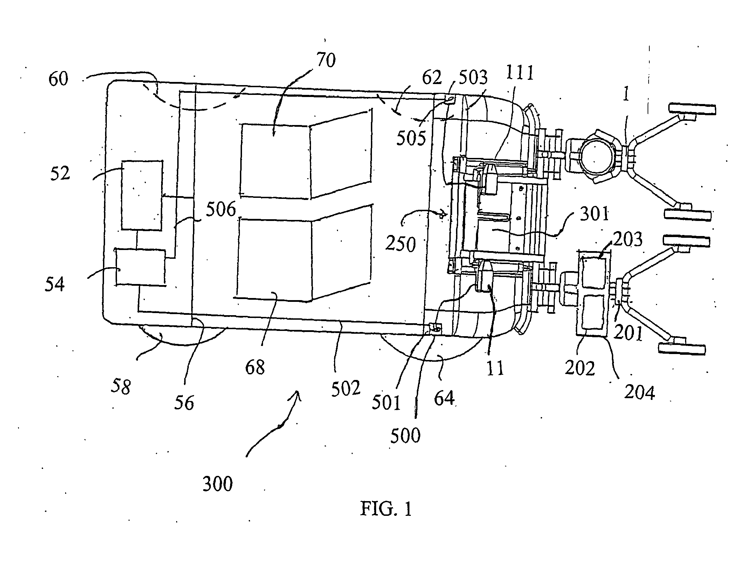

Fig. 1 shows, in schematic form, a motorized golf car or cart 300 having a motor 52 with an axle 56 driving front wheels 58, 60 of the cart 300. The motor 52 may be any type of motor, for example electric or internal combustion driven. The cart 300 also has a battery 54, which preferably is rechargeable. The cart 300 is an existing cart having a golf bag bay 301, which has been retrofitted with an actuating device 250. Attached to the actuating device are detachable devices, including a shopping cart 201, and a wheeled golf club carrier 1. Shopping cart 201 may have a square shaped holder for two shopping bags 202, 203, for example. The golf car 300 also has rear wheels 62, 64 and a first seat 68 and a second seat 70. The motor 52 also could drive rear wheels 62, 64, and first seat 68 and second seat 70 may be side-by-side in the form of a single bench seat.

An electrical circuit from battery 54 may power actuators 11, 111, with actuator 11 permitting lifting and releasing of detachable shopping cart 201, and device 111 permitting lifting and releasing detachable golf club carrier 1. An electrical supply line 502 may power actuator 11 and supply line 506 may power actuator 111. A switch 500, with an up/down knob 501, may raise or lower shopping cart 201 and a switch 503 with an up/down knob 505 may raise or lower golf club carrier 1, or other detachable devices.

The Linak LA-31 electrically-driven fast motor actuators discussed above, for example, run on 24 volts, so that four 6 volt rechargeable batteries, often present in existing electrically-driven motorized golf cars can be used to power the actuators. The connecting of the electrical circuit thus may be accomplished by accessing rechargeable batteries of the electrically-driven golf car and connecting one wire to a negative terminal of a first battery and the other wire to a positive terminal of a fourth battery. If the golf car is internal combustion driven, rechargeable batteries may be provided separately.

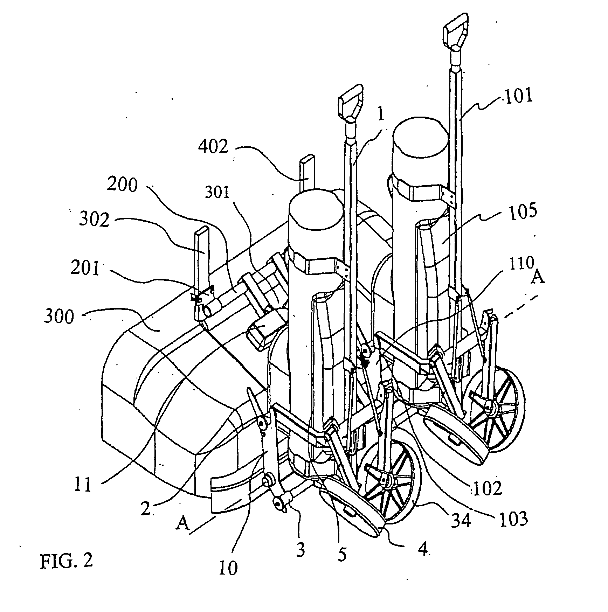

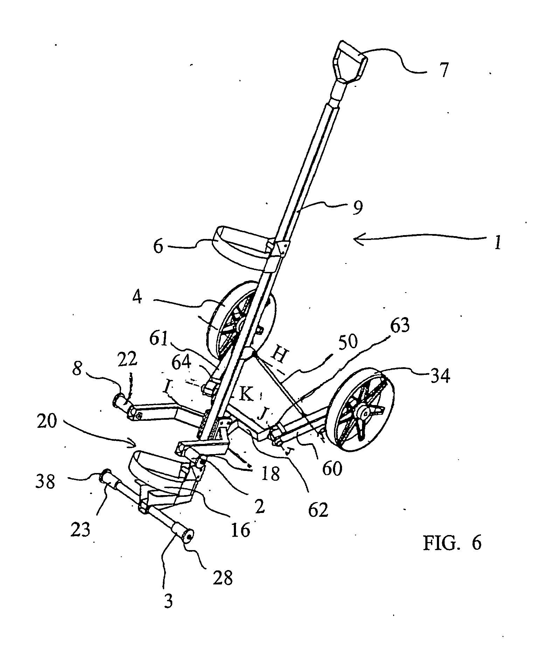

As shown in Fig. 2, the detachable devices may also be two wheeled golf club carriers 1,101. Wheeled golf club carrier 1 has wheels 4, 34 and a carrier hitching device 20 having a first mount tube rollers 2, 22 and a second mount tube rollers 3, 23 (Fig. 6). Carrier 1 includes a golf bag 5, which is attached by a golf bag holder or straps. As shown in Fig. 6, each wheeled golf club carrier 1 has a handle 7, golf bag holders 6, 16, wheels 3, 34, and a main frame 9. Carrier hitching device 20 has mount tube rollers 2, 22, and 3, 23 which have end caps 8, 18, and 28, 38 respectively. A leg actuation bracket 62 is rotatably connected to the main frame 9 about an axis I. Rotatably connected on the opposite end of leg actuation bracket 62 are a set of wheel legs 60, 61 respectively about an axes J and K. A set of leg struts 50,51 are connected spherically about an axis H to main frame 9. Spherically connected to the opposite end of leg strut 50 about an axis R is wheel leg 60. Spherically connected to the opposite end of leg strut 51 about an axis S is wheel leg 61. The wheels 4, 34 are shown in an extended position in which the upper surface of leg actuation bracket 62 is parallel to the upper surface of wheel legs 60, 61.

As shown in Fig. 2, carrier 101 may be identical to carrier 1, and have a golf bag 105, upper mount tube rollers 102, 122 and lower mount tube rollers 103, 123.

Carrier 1 is detachably connected to a lift bracket 10, which can rotate about an axis A-A. Above the axis A-A, the bracket 10 is connected to a linear actuator 11, which can rotate the bracket 10 about an axis A-A. The other end of actuator 11 is connected rotatably to a actuating device frame 200, which is attached via bracket assemblies 201, 204 to bag holder frames 302, 402, respectively, of golf car 300.

Second carrier 101 is detachably connected via mount tube rollers 102, 122, 103, 123 to a second bracket 110, also rotatable about an axis A-A. Brackets 10, 110 thus defined hitching devices for hitching the carriers 1, 101 to the golf car 300.

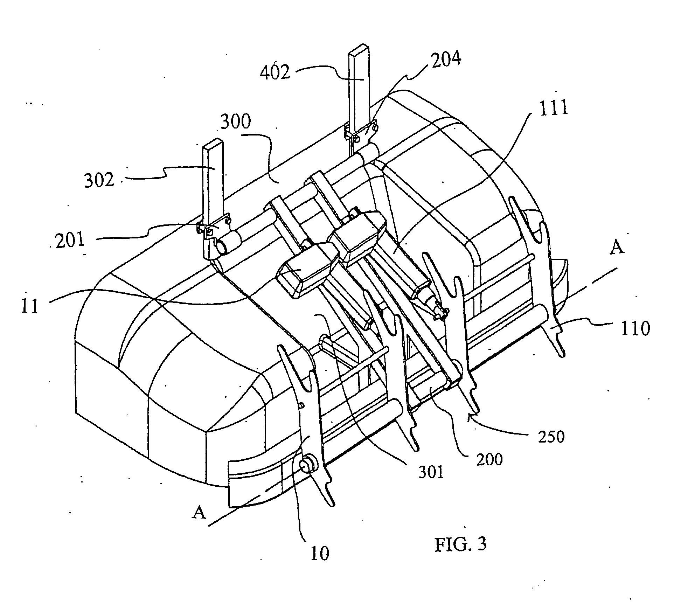

Figure 3 shows more detail of frame 200 of the actuating device 250. Second actuator 111 is connected to mount bracket 110, so as to enable mount bracket to selectively rotate about axis A-A.

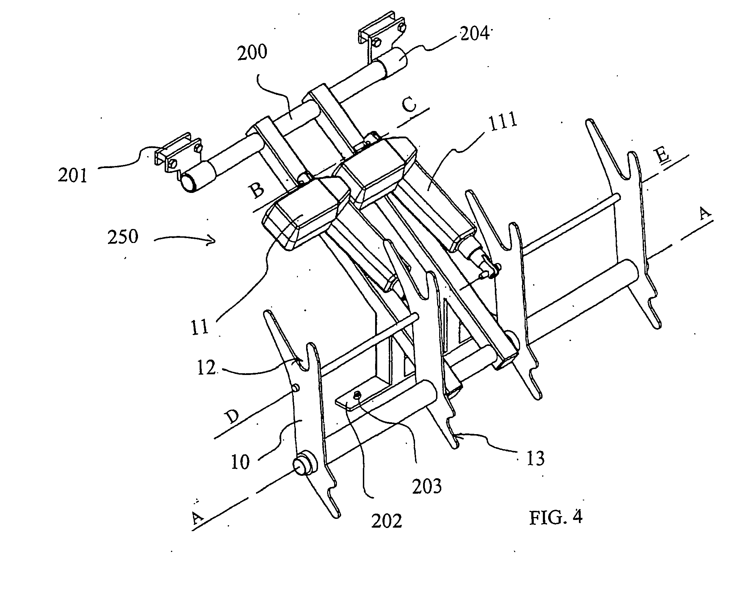

Fig. 4 shows the actuating device 250 in more detail. Frame 200 may include a footplate 202, which may be attached by bolts 203 to the bag bay 301 (Fig. 2), for example through water drainage holes. Nuts may be used to fasten the bolts. Device 250 thus is easily mountable in the golf bag bay 301 using brackets 201, 204, and bolts 203.

The mount bracket 10 preferably has an upper claw 12, and a lower claw 13. Attached to the mount bracket 10 at one side is the actuator 11, which may be pivotally connected about an axis D. The other end of actuator 11 may be pivotally connected to frame 200 about an axis B.

Likewise, second actuator 111 may be pivotally connected to frame 200 about an axis C, and to a side of mount bracket 110 about an axis E. When actuator 11 and actuator 111 are in a same position, axes D and E preferably are coaxial, as are axes B and C.

Frame 200 preferably is made of metal, although it could also be made of high-grade plastic or other suitable materials.

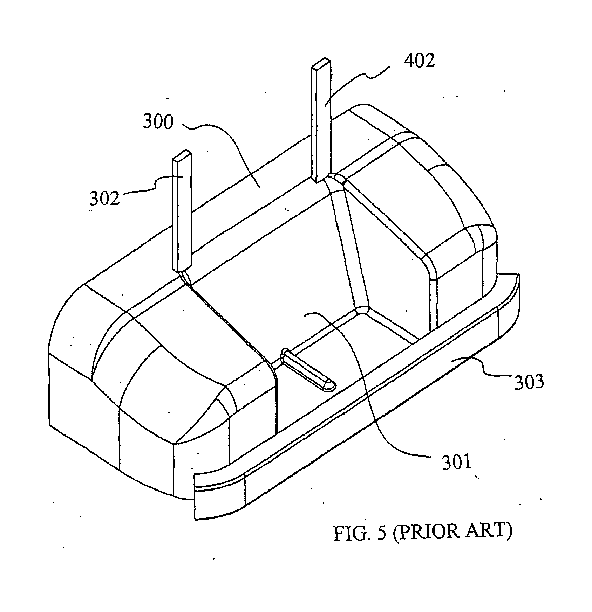

Fig. 5 shows a conventional rear of a golf car 300 with a bag bay 301, without retrofitting with actuating device 250. Golf car 300 has a bumper 303.

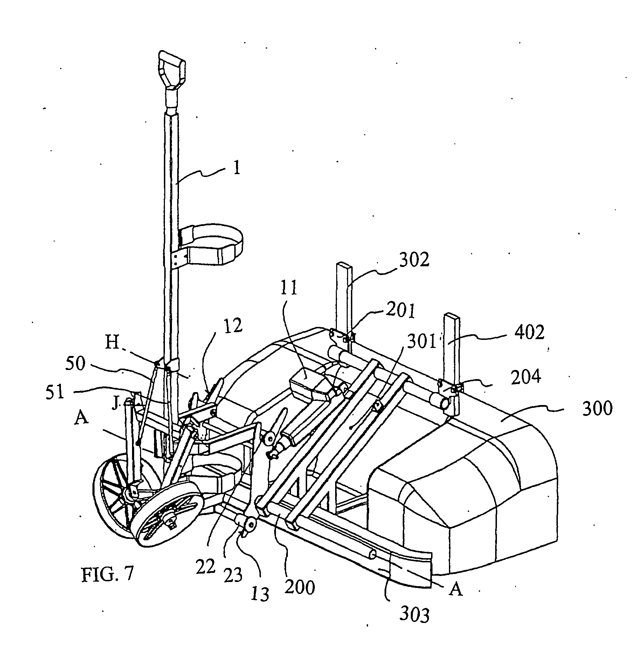

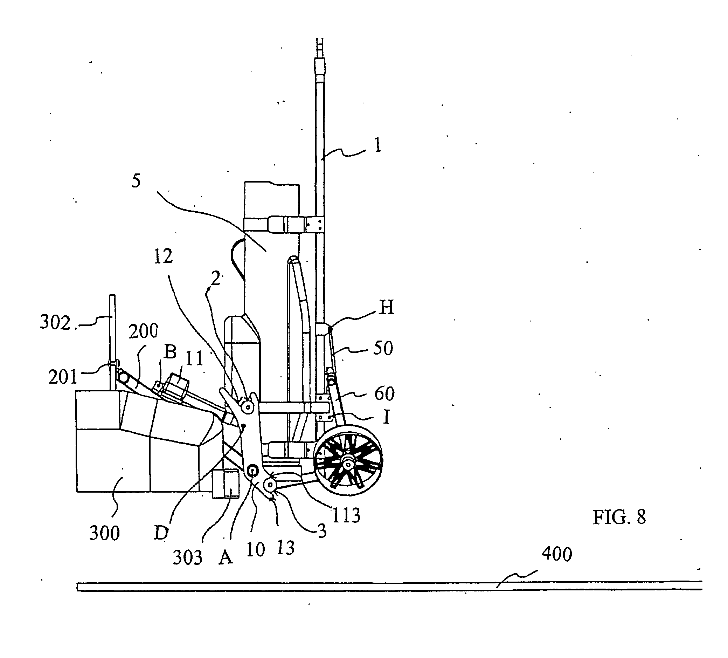

Figs. 7 and 8 show the golf club carrier 1 attached in the retracted position to the first hitching device comprised of lift bracket 10 in its second or retracted position. Upper mount tube rollers 2, 22 fit in upper claw 12, and lower mount tube rollers 3, 23 fit in lower claw 13. The wheels 4, 34 are shown in a collapsed position so as to minimize the distance the golf club carrier 1 extends beyond the bumper 303 while in the second or retracted position. The second hitching device and second actuator of the actuating device, as well as golf bag 5, are not shown in this view for clarity.

Lower claw 13 preferably is spaced from upper claw 12 so that when upper mount tube rollers 2, 22 are located fully fit in upper claw 12, lower mount tube rollers 3, 23 can rotate freely into and out of claw 13, although as shown in Fig. 8, the weight of carrier 1 causes a torque about upper mount tube rollers 2, 22 that holds mount tube 3 firmly in claw 13. Claw 13 may include a clip which entraps the lower-mount tube rollers 3, 23 and prevents rotation out of claw 13 when the carrier 1 is attached in the second or retracted position (Fig. 7, 8).

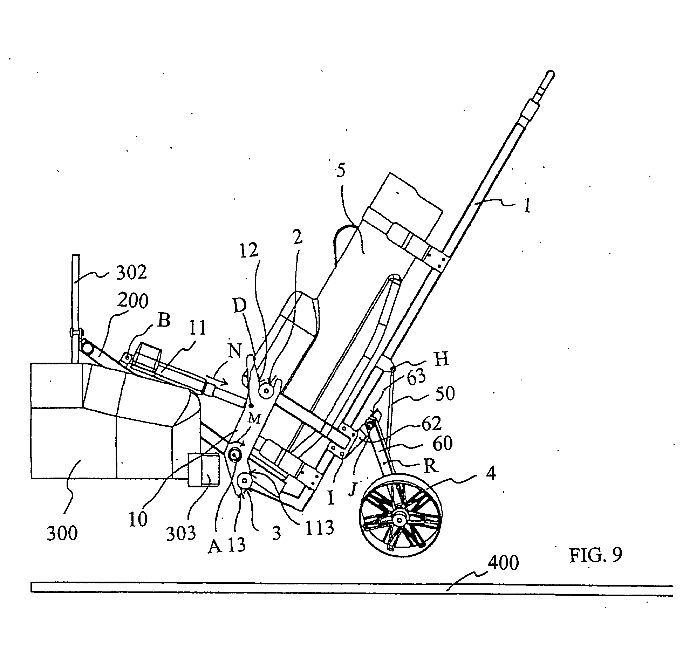

Fig. 9 shows golf club carrier 1 being lowered, for example by a golfer lowering knob 501 of switch 500 (Fig. 1).. Linear actuator 11 thus extends in the direction of arrow N, causing lift bracket 10 to rotate in the direction of the arrow M about axis A. Mount bracket 10 can for example be mounted with a bearing on frame 200, which includes a bar coaxial with axis A. Thus, the first hitching device is between the second position shown in Fig. 8 and a first position where the linear actuator is fully extended. The wheel 4 however remains off of ground 400. Leg actuation bracket 62 has rotated clockwise about axis I while wheel leg 60 has rotated counterclockwise about axis J due to the weight of the wheel 4.

As the claw 12 of bracket 10 rotates in direction M, torque caused by the weight of carrier 1 keeps lower mount tube rollers 3, 23 in claw 13, since a clockwise torque as shown in Fig. 9 is created about upper mount tube rollers 2, 22.

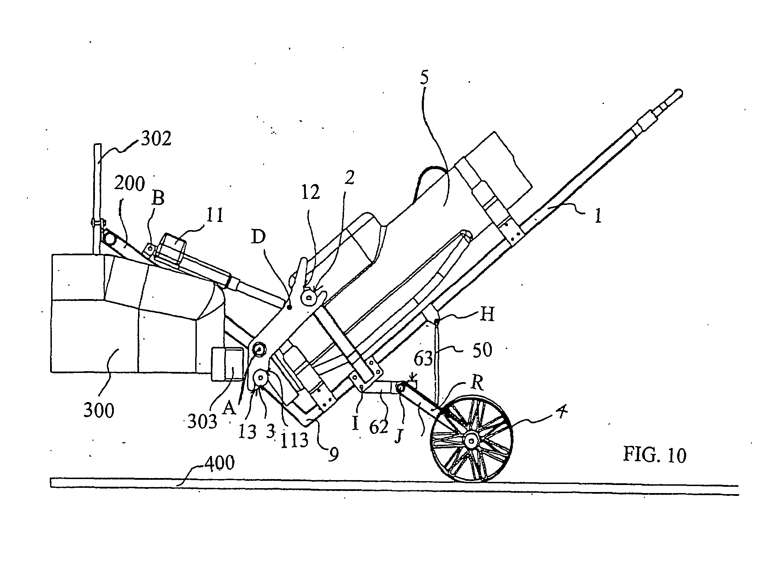

Fig. 10 shows the actuator 11 before its first or fully extended position. As shown in Fig. 10, wheel 4 contacts ground in this position, but frame 9 remains above ground. Upper mount tube rollers 2, 22 remain in claw 12 and lower mount tube rollers 3, 23 in claw 13 of lift bracket 10 due to the torque caused by the weight of carrier 1. Leg actuation bracket 62 has further rotated clockwise about axis I while wheel leg 60 has further rotated counterclockwise about axis J due to the weight of the wheel 4.

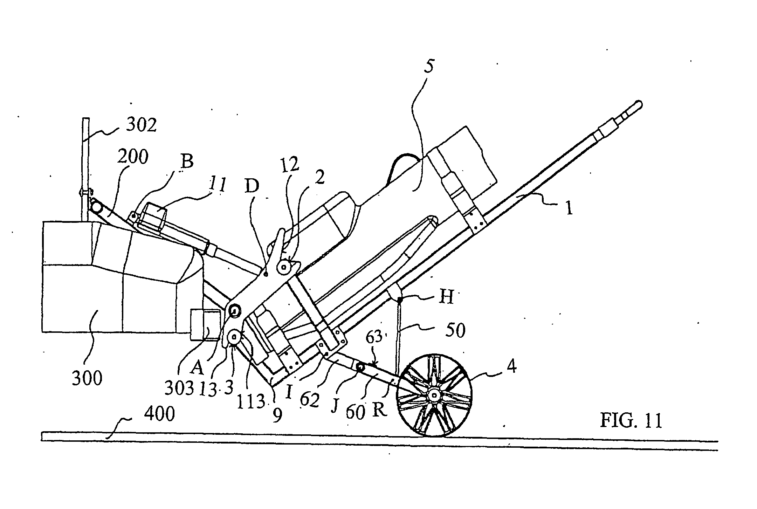

Fig. 11 shows the actuator 11 further extended from the Fig. 10 position, but before its first or fully extended position. As shown in Fig. 11, the contact of wheel 4 with the ground has imposed a torque on wheel leg 60 about axis R. This torque coupled with the support of leg strut 50 causes wheel leg 60 to further rotate counterclockwise about axis J while causing leg actuation bracket 62 to rotate further clockwise about axis I. The rotation of the wheel leg 60 relative to the leg actuation bracket 62 stops when the leg actuation stop 63 contacts the upper surface of wheel leg 60 presenting the wheel 4 in the fully extended position.

As shown in Fig. 11, contact of the leg actuation stop 63 with the upper surface of wheel leg 60 begins to create an opposite torque about upper mount tube rollers 2, 22, counterclockwise about mount tube rollers 2, 22 in the Fig. 11 view..

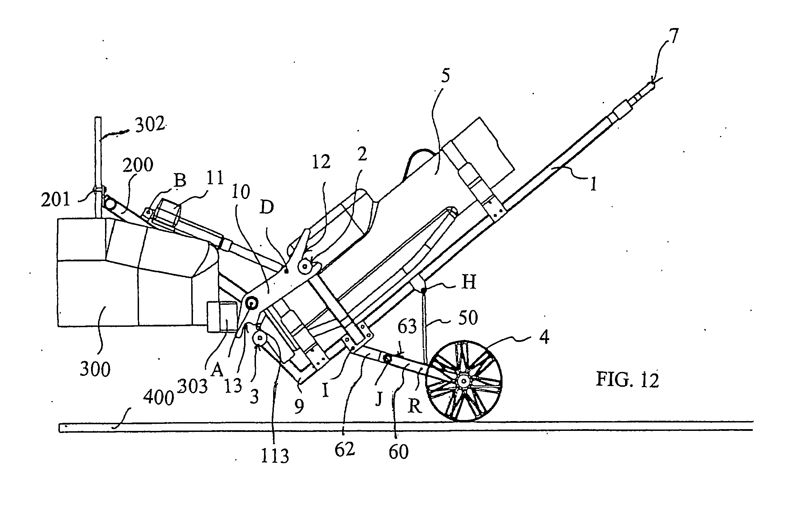

Fig. 12 shows a first release step of the golf club carrier 1 from lift bracket 10 with actuator 11 in a fully extended position. As the actuator 11 extends past the Fig. 11 position, lower mount tube rollers 3, 23 swing free of claw 13 due to the torque created by wheel 4 contacting the ground 400 and leg actuation stop 63 contacting the upper surface of wheel leg 60. Tube rollers 3, 23 move past finger 113. Bracket 10 may contact bumper 303 as an additional stop.

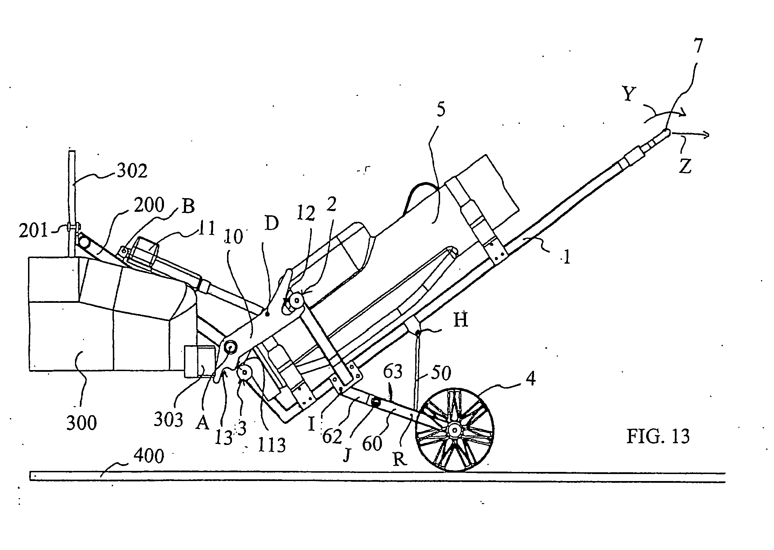

Fig. 13 shows a second release step of the golf club carrier 1. Once lower mount tube rollers 3,23 have cleared lower claw 13, the user can rotate handle 7 in direction Y to release upper mount tube rollers 2, 22 from upper claw 12 and then pull carrier 1 in direction Z.

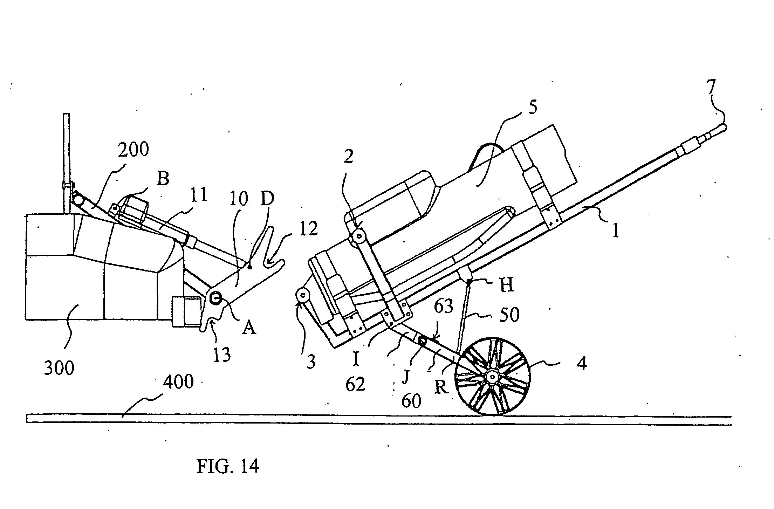

Fig. 14 shows the golf club carrier 1 fully released from the motorized golf car 300. The weight of the golf club carrier 1 and golf bag 5 acting through the wheel 4 imposes a torque about axis R which keeps the leg actuation stop 63 in contact with.the upper surface of wheel leg 60. This action causes the wheel 4 to remain in the extended position when pulling golf club carrier 1 over the ground.

To reattach golf club carrier 1 to lift bracket 10 or 110, upper mount tube rollers 2, 22 are positioned into upper claw 12 as shown in Fig. 12, by a user. The user then can move knob 501 upwardly, and switch 500 causes actuator 11 to retract, lifting golf club carrier 1 off ground 400. Alternately, the actuator 11 may begin to retract automatically once tube rollers 2, 22 are in claw 12, for example by pushing down a paddle actuator or completing an electric circuit.

As wheel 4 begins to lift off ground 400 as shown in Fig. 9, the clockwise torque about tube rollers 2, 22 created by the weight of carrier 1 causes mount tube rollers 3, 23 to move past finger 113 and enter claw 3.

It should be understood that carrier 101 and shopping cart 201 may have similar hitching devices as that of carrier 1. A locking device, for example, with a key, can be used to lock the carriers 1, 101, 201 to the golf car for security.

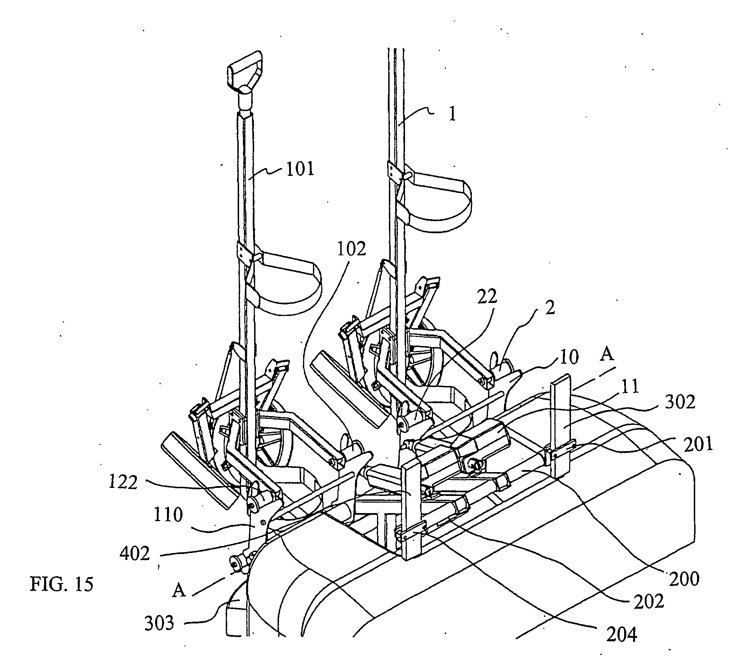

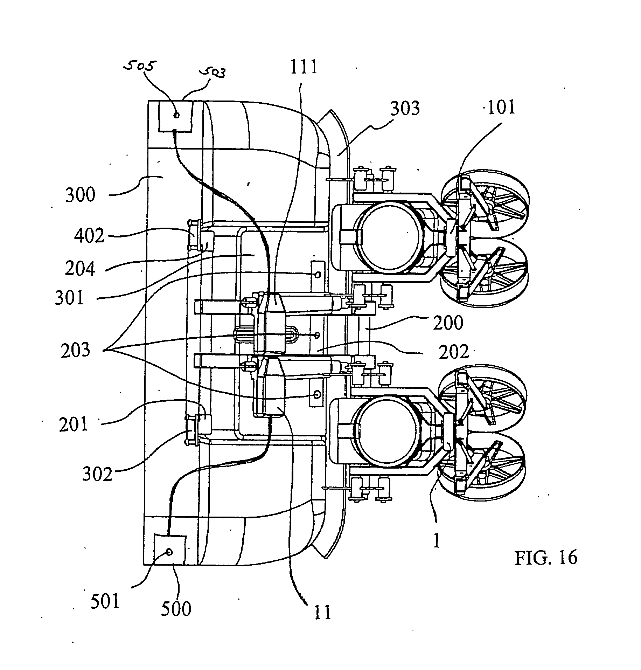

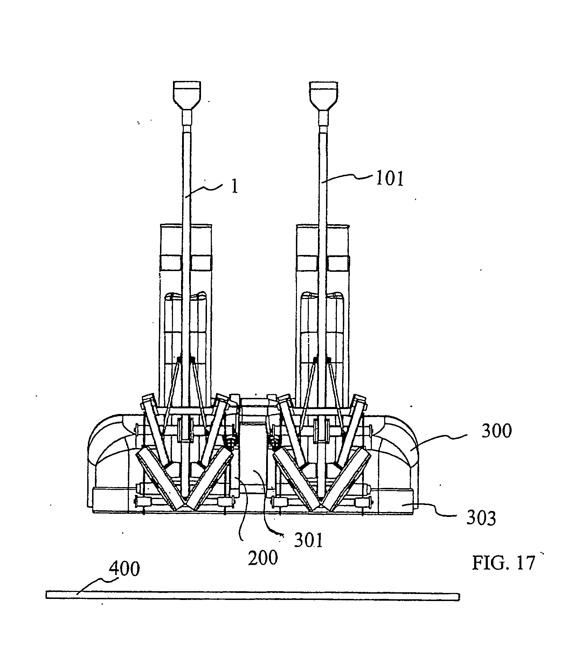

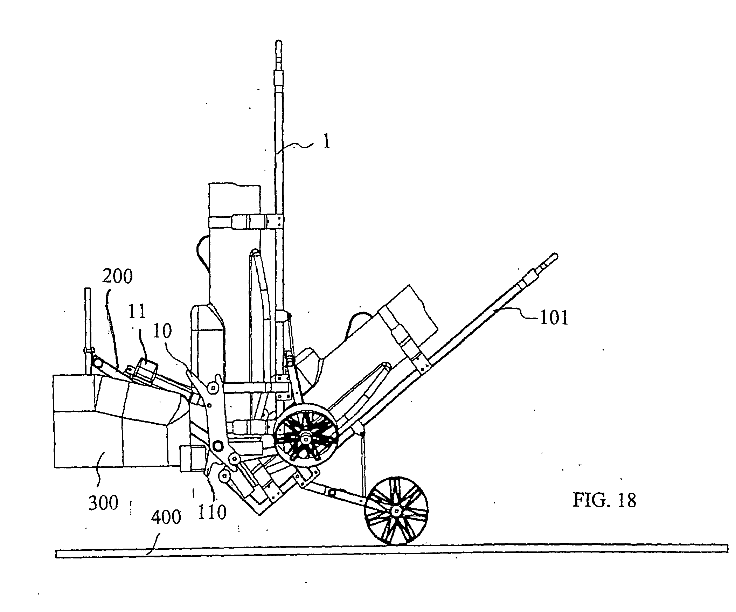

Additional views of the present invention are provided as well. Fig. 15 shows a different perspective view of the Fig. 2 configuration, the golf bags not being shown for clarity. Fig. 16 shows a top view of the Fig. 2 configuration. Fig. 17 shows a rear view of the Fig. 2 configuration. Fig. 18 shows the Fig. 2 view with the first actuator 11 in the second or retracted position and the second actuator 111 in the first or extended position.

Many other types of detachable devices thus are possible to attach to the golf car using the hitching devices. Wheelchairs and customized carriers, such as garden tool carriers for a garden tool set or golf course repair carriers with a course repair set, are possible. In some cases, both actuators can be used to lift a single detachable device with a hitching device or devices connected to both hitching devices on the golf car. However, the user should ensure the lifting is synchronized.

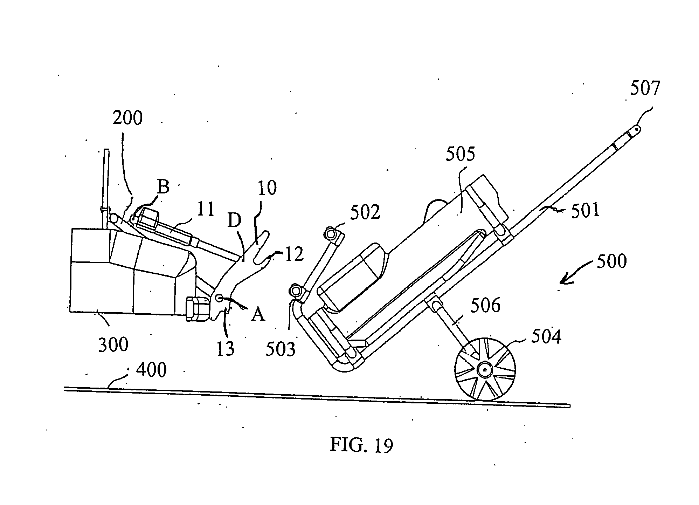

Fig. 19 shows an alternate golf club carrier 500 with a frame 501, handle 507 and a golf bag 505. A stationary support 506 fixed to frame 501 supports wheels 504. Two horizontal bars 502 and 503 of a hitching device of the carrier 500 are supported on the frame to interact with the hitching device 10 on the golf car. Such a device is described as well in U.S. Serial No. 10/159,634 filed May 31, 2002, to which priority is claimed and which is incorporated by reference herein.

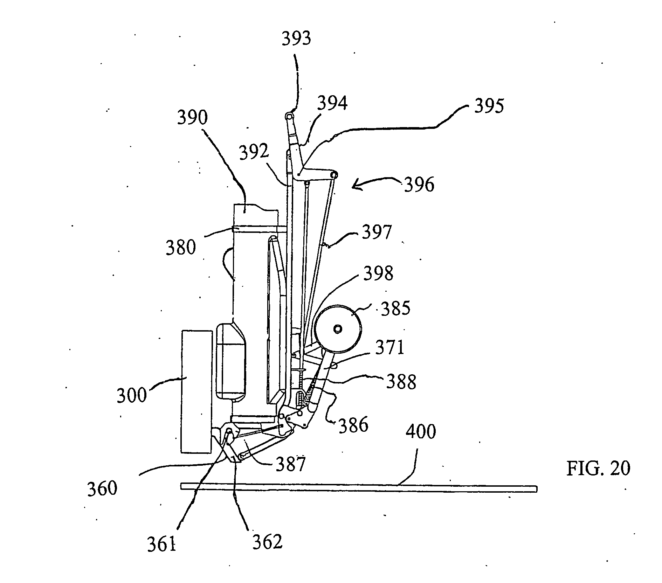

Fig. 20 show an alternate hitching device 360 of the present invention which has stationary ramp 361 with a crossbar 362. Golf club carrier 396 includes a a bag 390, straps 380, frame 392, a rotatable wheel support 371, and wheels 385. A claw 387 of the golf club carrier 396 can grasp the crossbar 362 to hold the club carrier 396 on the golf car 300. A handle 393 on a support 394 pivots about a pivot 395. A leaf spring holds the handle 393 to secure the golf club carrier to the golf car 300. To release the golf club carrier 396, the handle 393 is pulled away from the golf car 300 to pivot about pivot 395, which causes leg actuation shaft 397 to move down and move a bracket 398 downwardly. A support cable 388 attached to bracket 388 connects to the support 371. The pivoting of handle 393 also causes a spring load shaft 384 to move down and compress spring 388. This movement also releases the claw 387. Support 371 drops and wheels 385 contact the ground. Springs 386 also are provided for support 371 to store energy. No actuators are required and the springs provide for easy lifting. This embodiment is described as well in U.S. Serial No. 09/924,039 filed August 7, 2001, to which priority is claimed and which is incorporated by reference herein.

[0111] The present invention also provides a motorized golf car where the bag bay is eliminated and two hitches are provided directly at a vertical surface. This embodiment is described as well in U.S. Serial No. 09/961,882 filed Septemebr 24, 2001, to which priority is claimed and which is incorporated by reference herein.

## Claims

1. A golf cart with a detachable golf club carrier comprising:
a motorized golf cart (300) for movement over a ground surface (400) the golf cart having seating for at least two golfers, the motorized golf cart having a motor (52) and a first hitching device and a second hitching device,
a first manually-operable golf club carrier (1, 101; 396; 500) having at least one wheel (4, 34; 385; 504) and a first carrier hitching device (20) removably connected to one of the first hitching device and the second hitching devices, the first carrier hitching device (20) being connectable with the one of the first hitching device and the second hitching devices while the at least one wheel (4, 34; 385; 504) is on the ground surface (400), and
a second manually-operable golf club carrier (101) having at least one wheel (4, 34) and a second carrier hitching device (20) removably connected to the other of the first hitching device and the second hitching device.

2. The golf cart as recited in claim 1 wherein the at least one wheel (4, 34; 385; 504) is retractable from the ground surface (400) when the carrier hitching device (20) is connected to the first hitching device.

3. The golf cart as recited in claim 1 or 2 wherein the first hitching device includes a mount bracket (10, 110) for receiving a bar (502, 503) of the carrier hitching device (20; 500).

4. The golf cart as recited in one of the claims 1 to 3 wherein the golf club carrier (1, 101, 396; 500) has two wheels (4, 34; 385; 504) and further includes an axle connecting the two wheels.

5. The golf cart as recited in one of claims 1 to 4 wherein the golf club carrier (1, 101; 396) includes a securing arrangement (393, 394, 395, 397, 398, 386) for removably connecting the golf club carrier to the first hitching device.

6. The golf cart as recited in claim 5 wherein the securing arrangement (393, 394, 395, 397, 398, 386) includes a handle (393) rotatable with respect to the carrier body of the golf club carrier (1, 101, 396; 500), wherein the handle (393) is connected to a spring (386).

7. The golf cart as recited one of claims 1 to 6 wherein the golf club carrier (1, 101) includes a carrier body and a golf club bag (5) removable from the carrier body.

8. The golf cart as recited in one of claims 1 to 7 wherein the first hitching device is located at a side of the golf cart.

9. The golf cart as recited in one of claims 1 to 8 further comprising a first driven actuator (11) for moving the first hitching device and a second driven actuator (111) controllable independently of the first driven actuator (11) for moving the second hitching device.

10. The golf cart as recited in one of the claims 1 to 9 wherein the golf cart (300) has a rear bag bay (301), and further comprising a support for the first and second hitching devices located in the rear bag bay (301).

## Patentansprüche

1. Golfwagen, mit einem abnehmbaren Golfschlägerträger, umfassend
einen motorisierten Golfwagen (300) für eine Bewegung auf einem Untergrund (400), wobei der Golfwagen eine Sitzfläche für zumindest zwei Golfspieler aufweist, und der motorisierte Golfwagen einen Motor (52) und eine erste Anhängevorrichtung und eine zweite Anhängevorrichtung aufweist,
einen manuell betätigbaren ersten Golfschlägerträger (1, 101; 396; 500) mit zumindest einem Rad (4, 34; 385; 504) und einer ersten Trägeranhängevorrichtung (20), die mit der ersten Anhängevorrichtung oder der zweiten Anhängevorrichtung lösbar verbunden ist, wobei die erste Trägeranhängevorrichtung (20) mit der ersten Anhängevorrichtung oder der zweiten Anhängevorrichtung verbunden ist, während das zumindest eine Rad (4, 34; 385; 504) in Kontakt mit dem Untergrund (400) ist, und
einen manuell betätigbaren zweiten Golfschlägerträger (101) mit zumindest einem Rad (4, 34) und einer zweiten Trägeranhängevorrichtung (20), die mit der anderen Vorrichtung gebildet aus ersten Anhängevorrichtung und der zweiten Anhängevorrichtung abnehmbar verbunden ist.

2. Golfwagen nach Anspruch 1, bei dem das zumindest eine Rad (4, 34; 385; 504) von dem Untergrund (400) zurückziehbar ist wenn die Trägeranhängevorrichtung (20) mit der ersten Anhängevorrichtung verbunden ist.

3. Golfwagen nach Anspruch 1 oder 2, bei dem die erste Anhängevorrichtung eine Befestigungshalterung (10, 110) zur Aufnahme einer Stange (502, 503) der Trägeranhängevorrichtung (20; 500) umfasst.

4. Golfwagen nach einem der Ansprüche 1 bis 3, bei dem der Golfschlägerträger (1, 101, 396; 500) zwei Räder (4, 34; 385; 504) aufweist und des Weiteren eine Achse umfasst, die die zwei Räder verbindet.

5. Golfwagen nach einem der Ansprüche 1 bis 4, bei dem der Golfschlägerträger (1, 101; 396) eine Befestigungsanordnung(393, 394, 395, 397, 398, 386) umfasst, um den Golfschlägerträger mit der ersten Anhängevorrichtung lösbar zu verbinden.

6. Golfwagen nach Anspruch 5, bei dem die Befestigungsanordnung (393, 394, 395, 397, 398, 386) ein Griffelement (393) umfasst, das bezüglich des Trägerkörpers des Golfschlägerträgers (1, 101, 396; 500) drehbar ist, wobei das Griffelement (393) mit einer Feder (386) verbunden ist.

7. Golfwagen nach einem der Ansprüche 1 bis 6, bei dem der Golfschlägerträger (1, 101) einen Trägerkörper und eine von dem Trägerkörper abnehmbare Golfschlägertasche (5) umfasst.

8. Golfwagen nach einem der Ansprüche 1 bis 7, bei dem die erste Anhängevorrichtung an einer Seite des Golfwagens angeordnet ist.

9. Golfwagen nach einem der Ansprüche 1 bis 8, die des Weiteren einen ersten Antriebsmotor (11) zum Bewegen der ersten Anhängevorrichtung und einen zweiten Antriebsmotor (111) zum Bewegen der zweiten Anhängevorrichtung aufweist, wobei der zweite Antriebsmotor (111) unabhängig von dem ersten Antriebsmotor (11) steuerbar ist.

10. Golfwagen nach einem der Ansprüche 1 bis 9, bei dem der Golfwagen (300) eine rückwärtige Taschenausbuchtung (301) und des Weiteren ein Stützelement für die ersten und zweiten Anhängevorrichtungen aufweist, welches Stützelement in der rückwärtigen Taschenausbuchtung (301) angeordnet ist.

## Revendications

1. Voiturette de golf avec support de club de golf détachable, comprenant :
une voiturette de golf (300) motorisée pour le mouvement sur une surface de terrain (400), la voiturette de golf ayant des sièges pour au moins deux golfeurs, la voiturette de golf motorisée ayant un moteur (52) et un premier dispositif d'attelage et un second dispositif d'attelage,
un premier support de club de golf (1, 101 ; 396 ; 500) pouvant être actionné manuellement, ayant au moins une roue (4, 34 ; 385 ; 504) et un premier dispositif d'attelage (20) de support raccordé de manière amovible à l'un parmi le premier dispositif d'attelage et le second dispositif d'attelage, le premier dispositif d'attelage (20) de support pouvant être raccordé avec l'un parmi le premier dispositif d'attelage et le second dispositif d'attelage alors que la au moins une roue (4, 34 ; 385 ; 504) est sur la surface de terrain (400), et
un second support de club de golf (101) pouvant être actionné manuellement, ayant au moins une roue (4, 34) et un second dispositif d'attelage (20) de support raccordé de manière amovible à l'autre parmi le premier dispositif d'attelage et le second dispositif d'attelage.

2. Voiturette de golf selon la revendication 1, dans laquelle la au moins une roue (4, 34 ; 385 ; 504) est rétractable de la surface de terrain (400) lorsque le dispositif d'attelage de support (20) est raccordé au premier dispositif d'attelage.

3. Voiturette de golf selon la revendication 1 ou 2, dans laquelle le premier dispositif d'attelage comprend un support de fixation (10, 110) pour recevoir une barre (502, 503) du dispositif d'attelage (20 ; 500) de support.

4. Voiturette de golf selon l'une quelconque des revendication 1 à 3, dans laquelle le support de club de golf (1, 101, 396 ; 500) a deux roues (4, 34; 385 ; 504) et comprend en outre un essieu raccordant les deux roues.

5. Voiturette de golf selon l'une quelconque des revendications 1 à 4, dans laquelle le support de club de golf (1, 101 ; 396) comprend un agencement de fixation (393, 394, 395, 397, 398, 386) pour raccorder de manière amovible le support de club de golf au premier dispositif d'attelage.

6. Voiturette de golf selon la revendication 5, dans laquelle l'agencement de fixation (393, 394, 395, 397, 398, 386) comprend une poignée (393) rotative par rapport au corps de support du support de club de golf (1, 101, 396 ; 500), dans laquelle la poignée (393) est raccordée à un ressort (386).

7. Voiturette de golf selon l'une quelconque des revendications 1 à 6, dans laquelle le support de club de golf (1, 101) comprend un corps de support et un sac de club de golf (5) amovible du corps de support.

8. Voiturette de golf selon l'une quelconque des revendications 1 à 7, dans laquelle le premier dispositif d'attelage est situé d'un côté de la voiturette de golf.

9. Voiturette de golf selon l'une quelconque des revendications 1 à 8, comprenant en outre un premier actionneur entraîné (11) pour déplacer le premier dispositif d'attelage et un second actionneur entraîné (111) pouvant être commandé indépendamment du premier actionneur entraîné (11) pour déplacer le second dispositif d'attelage.

10. Voiturette de golf selon l'une quelconque des revendications 1 à 9, dans laquelle la voiturette de golf (300) a un renfoncement de sac arrière (301), et comprenant en outre un support pour les premier et second dispositifs d'attelage situé dans le renfoncement de sac arrière (301).
